# EUROPEAN PATENT SPECIFICATION

(11) **EP 3 290 230 B1**
(45) Date of publication and mention of the grant of the patent: **23.09.2020**
(21) Application number: 16786259.8
(22) Date of filing: 29.03.2016
(51) Int. Cl.: B60C 5/01, B60C 9/22, B60C 5/00, B60C 15/00, B60C 7/00

(54) **TIRE**
REIFEN
PNEU

(30) Priority: 27.04.2015 JP 2015090500
(43) Date of publication of application: 07.03.2018
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2016/060206
(87) International publication number: WO 2016/174982

(56) References cited:
- EP-A1- 0 091 391
- WO-A1-2014/129380
- WO-A1-2014/171462
- WO-A1-2015/005172
- JP-A- H03 143 701
- JP-A- 2011 042 236
- JP-A- 2011 042 238
- JP-A- 2012 046 024
- JP-A- 2014 205 462
- JP-A- 2015 039 903

## Description

### Technical Field

The present invention relates to a tire, and in particular a tire having a tire frame member formed using a resin material.

### Background Art

In recent years, there has been demand for the use of resin materials (for example thermoplastic resins and thermoplastic elastomers) as tire materials, from the perspectives of weight reduction, ease of molding, and ease of recycling.

Japanese Patent Application Laid-Open (JP-A) No. H03-143701 describes a tire in which a reinforcing layer formed by rubber-covered reinforcing cords, and a rubber tread, are laid over a flat crown portion of a resin tire frame member.

### SUMMARY OF INVENTION

### Technical Problem

In the tire described in JP-A No. H03-143701, a difference in rigidity arises between the resin tire frame member and the rubber-containing reinforcing layer. When tire width direction force is input to the tread during cornering and the like, the rubber configuring the reinforcing layer undergoes elastic deformation with the tread, such that the reinforcing layer moves in the tire width direction with respect to the tire frame member. Depending on the magnitude of the tire width direction input, there could therefore be a possibility of an excessive separation force arising between the tire frame member and the reinforcing layer.

In consideration of the above circumstances, an object of the present invention is to provide a tire capable of suppressing an excessive separation force from arising between a rubber-containing reinforcing layer and a tire frame member formed from a resin material in response to tire width direction input.
Reference is also made to WO 2014/171462, which discloses a tire according to the preamble of Claim 1, and also to EP 0091391 and WO 2014/129380.

### Solution to Problem

A tire of a first aspect of the present invention includes a tire frame member, a reinforcing layer, and projections. The tire frame member is circular and is formed from a resin material. The tire frame member includes a bead portion, a side portion continuous with a tire radial direction outer side of the bead portion, and a crown portion continuous with a tire width direction inner side of the side portion. The reinforcing layer is provided at a tire radial direction outer side of the crown portion, and is formed by covering, with rubber, a reinforcing cord extending in a direction intersecting the tire width direction. A tread is laid at the tire radial direction outer side of the reinforcing layer. A cover layer extends from the bead portion to the side portion, and that covers an outer face of the side portion . Covering rubber is laid on the tire frame member so as to span from an outer face of each side portion to an inner face of the corresponding bead portion. The projections are respectively formed at both tire width direction sides of the crown portion such that the reinforcing layer is interposed between the projections. Each projection projects out from the outer circumferential surface of the crown portion toward the tire radial direction outer side, and includes a projection wall face contacted by a side face of the reinforcing layer at a tire width direction inner side of the projection. The cover layer is formed by covering a plurality of cover cords with rubber.

In the tire of the first aspect, the respective projections are formed at both tire width direction sides of the crown portion such that the reinforcing layer is interposed between the projections. The projection wall faces of the projections are contacted by the respective side faces of the reinforcing layer. The tire is thus more capable of suppressing tire width direction movement of the reinforcing layer caused by elastic deformation of the rubber configuring the reinforcing layer (rubber covering the reinforcing cord) in response to tire width direction input than, for example, a configuration in which the reinforcing layer is provided on a flat crown portion.

This thereby enables an excessive separation force to be suppressed from arising between the rubber-containing reinforcing layer and the tire frame member that is formed from a resin material in response to tire width direction input.

Further, as the outer face of the side portion is covered by the cover layer formed by covering plural cover cords with rubber, the cut resistance performance and weather resistance of the side portion is thereby improved in comparison to, for example, a configuration in which the outer face of the side portion is not covered with the cover layer.

A tire of a second aspect of the present invention is the tire of the first aspect, wherein each projection is annular and extends along a tire circumferential direction.

In the tire of the second aspect, each projection is annular and extends along the tire circumferential direction, thereby enabling tire width direction movement of the reinforcing layer to be further suppressed.

A tire of a third aspect of the present invention is the tire of either the first aspect or the second aspect, wherein a height of each projection is no greater than a thickness of the reinforcing layer.

In the tire of the third aspect, the height of each projection is no greater than the thickness of the reinforcing layer. This thereby enables localized increases in rigidity at locations corresponding to the projections of the crown portion to be suppressed in comparison to configurations in which, for example, the height of a projection is greater than the thickness of a reinforcing layer.

A tire of a fourth aspect of the present invention is the tire of the third aspect, wherein the height of each projection is greater than a length along the tire radial direction from an inner circumferential surface of the reinforcing layer to a tire radial direction inner side end portion of the reinforcing cord.

In the tire of the fourth aspect, the height of each projection is greater than the tire radial direction length from the inner circumferential surface of the reinforcing layer to the tire radial direction inner side end portion of the reinforcing cord. This thereby enables movement of the reinforcing cord due to elastic deformation of the rubber configuring the reinforcing layer in response to tire width direction input to be suppressed. This thereby enables an excessive separation force to be effectively suppressed from arising between the tire frame member and the reinforcing layer in response to tire width direction input.

A tire of a fifth aspect of the present invention is the tire of any one of the first aspect to the fourth aspect, wherein the reinforcing layer is formed by winding the rubber-covered reinforcing cord in a tire circumferential direction to form a spiral pattern.

In the tire of the fifth aspect, the reinforcing layer is formed by winding the rubber-covered reinforcing cord in the tire circumferential direction to form a spiral pattern between the projections on both tire width direction sides thereof. This thereby improves the tire circumferential direction rigidity of the crown portion.

A tire of a sixth aspect of the present invention is the tire of the fifth aspect, wherein, as viewed from the tire radial direction outer side of the crown portion, each projection wall face is inclined in the same direction as the reinforcing cord with respect to the tire circumferential direction.

In the tire of the sixth aspect, the projection wall faces are inclined in the same direction as the reinforcing cord with respect to the tire circumferential direction, such that a spacing (in other words, the thickness of the rubber) between the projection wall faces and the reinforcing cord is substantially uniform. Accordingly, in the tire, the advantageous effect of suppressing movement of the reinforcing cord caused by elastic deformation of the rubber configuring the reinforcing layer in response to tire width direction input is greater than in a configuration in which, for example, the projection wall faces are inclined in a different direction than the reinforcing cord with respect to the tire circumferential direction. This thereby enables an excessive separation force to be effectively suppressed from arising between the tire frame member and the reinforcing layer in response to tire width direction input.

### Advantageous Effects of Invention

As described above, the present invention is capable of providing a tire capable of suppressing an excessive separation force from arising between a tire frame member formed from a resin material and a rubber-containing reinforcing layer in response to tire width direction input.

### BRIEF DESCRIPTION OF DRAWINGS

Fig. 1 is a cross-section of a tire according to a first exemplary embodiment which is not according to the present invention but is useful for understanding it, taken along a tire width direction.
Fig. 2 is an enlarged cross-section of the portion of the tire indicated by arrow 2 in Fig. 1.
Fig. 3 is a plan view of a reinforcing layer and a tire frame member of the tire of Fig. 1, as viewed from a tire radial direction outer side.
Fig. 4 is a perspective view illustrating a tire width direction cross-section of a tire frame member employed in a tire according to the first exemplary embodiment, and illustrates a state in which a reinforcing cord has been wound onto the tire frame member.
Fig. 5 is a cross-section of a tire according to a second exemplary embodiment which is not according to the present invention but is useful for understanding it, taken along the tire width direction.
Fig. 6 is a perspective view illustrating a tire width direction cross-section of a reinforcing layer employed in a tire according to a third exemplary embodiment which is not according to the present invention but is useful for understanding it.
Fig. 7 is a perspective view illustrating a tire width direction cross-section of a modified example of a reinforcing layer employed in a tire according to the third exemplary embodiment.
Fig. 8 is a plan view to explain a manufacturing method of a tire according to the third exemplary embodiment, and illustrates a tire frame member as viewed from the tire radial direction outer side.
Fig. 9 is a plan view to explain an alternative manufacturing method of a tire according to the third exemplary embodiment, and illustrates a tire frame member as viewed from the tire radial direction outer side.
Fig. 10 is a perspective view illustrating a tire width direction cross-section to explain an alternative manufacturing method of a tire according to the first exemplary embodiment.
Fig. 11 is a cross-section of a tire according to a first embodiment of the present invention, taken along a tire width direction.
Fig. 12 is a perspective view illustrating a tire width direction cross-section of a first modified example of a reinforcing layer employed in a tire according to the first exemplary embodiment.
Fig. 13 is a perspective view illustrating a tire width direction cross-section of a second modified example of a reinforcing layer employed in a tire according to the first exemplary embodiment.
Fig. 14 is a perspective view illustrating a tire width direction cross-section of a third modified example of a reinforcing layer employed in a tire according to the first exemplary embodiment.

### DESCRIPTION OF EMBODIMENTS

Explanation follows regarding tires according to exemplary embodiments and the embodiment of the present invention, with reference to the drawings.

In the drawings, the arrow TW indicates a tire width direction, the arrow TR indicates a tire radial direction (a direction orthogonal to a tire axis of rotation (not illustrated in the drawings)), and the arrow TC indicates a tire circumferential direction. In the following explanation, the side closer toward the axis of rotation of the tire in the tire radial direction is referred to as the "tire radial direction inner side", and the side further from the axis of rotation of the tire in the tire radial direction is referred to as the "tire radial direction outer side". The side closer to a tire equatorial plane CL in the tire width direction is referred to as the "tire width direction inner side", and the opposite side thereto, namely the side further from the tire equatorial plane CL in the tire width direction, is referred to as the "tire width direction outer side".

Moreover, the methods for measuring dimensions of the respective parts of the tire are based on the methods set out in the Japan Automobile Tyre Manufacturers Association (JATMA) YEAR BOOK, 2015 edition.

### First Exemplary Embodiment

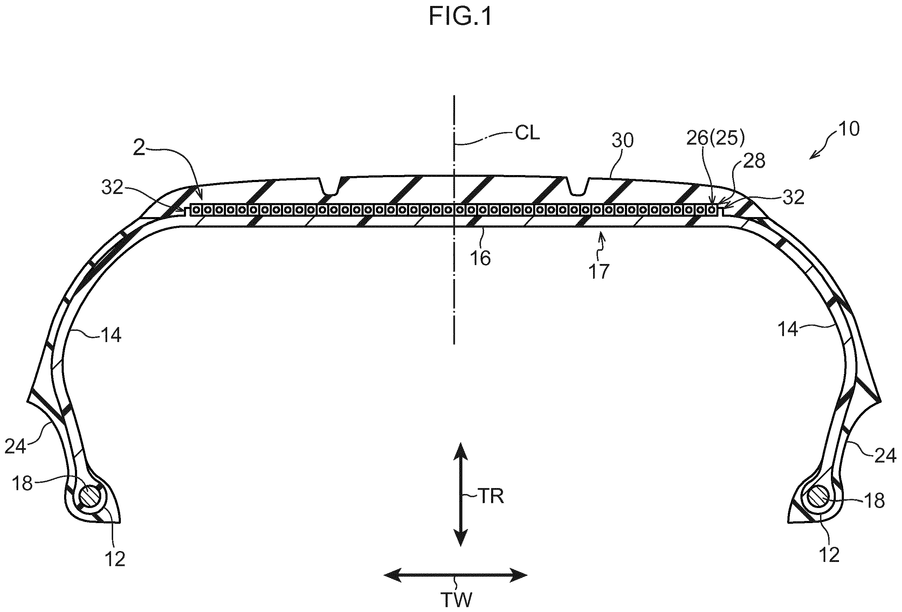

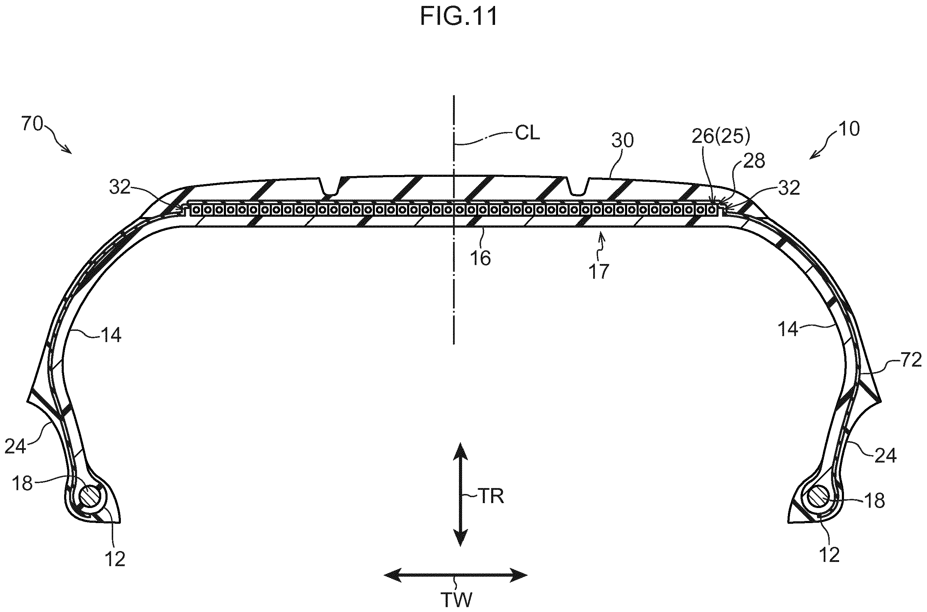

As illustrated in Fig. 1, a tire 10 of a first exemplary embodiment is a pneumatic tire employed when internally filled with air, and has a cross-section profile substantially the same as that of a traditional general rubber pneumatic tire. The tire 10 of the first exemplary embodiment is modified as shown in Fig. 11 to provide a tire according to the present invention.

The tire 10 of the present exemplary embodiment includes a tire frame member 17 configuring a frame section of the tire 10. The tire frame member 17 is formed in a circular shape using a resin material. The tire frame member 17 is configured including a pair of bead portions 12 disposed spaced apart from each other in the tire width direction, side portions 14 continuing from tire radial direction outer sides of the bead portions 12, and a crown portion 16 continuing from the tire width direction inner sides of the side portions 14 and connecting together tire radial direction outer side ends of the respective side portions 14.

Note that the circumferential direction, width direction, and radial direction of the tire frame member 17 respectively correspond to the tire circumferential direction, the tire width direction, and the tire radial direction.

The tire frame member 17 is formed using a resin material as its main raw material. "Resin materials" do not encompass vulcanized rubber. Examples of the resin material include thermoplastic resins (including thermoplastic elastomers), thermosetting resins, and other generic resins, as well as engineering plastics (including super-engineering plastics).

Thermoplastic resins (including thermoplastic elastomers) refer to polymer compounds that undergo material softening and flow as temperature increases, while adopting a comparatively hard and strong state when cooled. The present specification distinguishes between thermoplastic elastomers, these being polymer compounds that undergo material softening and flow as temperature increases, while adopting a comparatively hard and strong state when cooled, and that exhibit rubber-like elasticity; and non-elastomer thermoplastic resins, these being polymer compounds that undergo material softening and flow as temperature increases, while adopting a comparatively hard and strong state when cooled, and that do not exhibit rubber-like elasticity.

Examples of thermoplastic resins (including thermoplastic elastomers) include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), and thermoplastic vulcanizates (TPV), as well as polyolefin-based thermoplastic resins, polystyrene-based thermoplastic resins, polyamide-based thermoplastic resins, and polyester-based thermoplastic resins.

Thermoplastic materials having a deflection temperature under load (at a load of 0.45 MPa) as defined under ISO75-2 or ASTM D648 of 78°C or greater, a tensile yield strength as defined under JIS K7161 of 10 MPa or greater, a tensile elongation at break, similarly defined under JIS K7161, of 50% or greater, and a Vicat softening temperature (method A) as defined under JIS K7206 of 130°C or greater, may, for example, be employed for the thermoplastic materials listed above.

Thermosetting resins refer to polymer compounds that form a three dimensional network structure and harden as temperature increases. Examples of thermosetting resins include phenolic resins, epoxy resins, melamine resins, and urea resins.

Note that other than the thermoplastic resins (including thermoplastic elastomers) and the thermosetting resins already described, generic resin materials including (meta-)acrylic-based resins, EVA resins, vinyl chloride resins, fluororesins, and silicone based resins may be employed as the resin material.

Note that the tire frame member 17 may be formed from a single resin material, or respective locations of the tire frame member 17 (such as the bead portions 12, the side portions 14, and the crown portion 16) may be formed from resin materials having different characteristics to each other. Moreover, in the present exemplary embodiment, the tire frame member 17 is formed from a thermoplastic resin.

As illustrated in Fig. 1, the bead portions 12 are locations that fit together with a standard rim (not illustrated in the drawings) through covering rubber 24, and an annular bead core 18 extending along the tire circumferential direction is embedded inside each bead portion 12. The bead core 18 is configured by a bead cord (not illustrated in the drawings) that is a metal cord (for example a steel cord), an organic fiber cord, a resin-covered organic fiber cord, or a hard resin. Note that the bead cores 18 may be omitted as long as sufficient rigidity of the bead portions 12 can be secured.

The side portions 14 are locations configuring side portions of the tire 10, and curve around gently from the respective bead portions 12 toward the crown portion 16 so as to protrude toward the tire width direction outer side.

The crown portion 16 is a location that supports a tread 30, described later, that is laid at the tire radial direction outer side of the crown portion 16. Of an outer circumferential surface of the crown portion 16, a location between projections 32 on both tire width direction sides of the crown portion 16, described later, is configured with a flat profile.

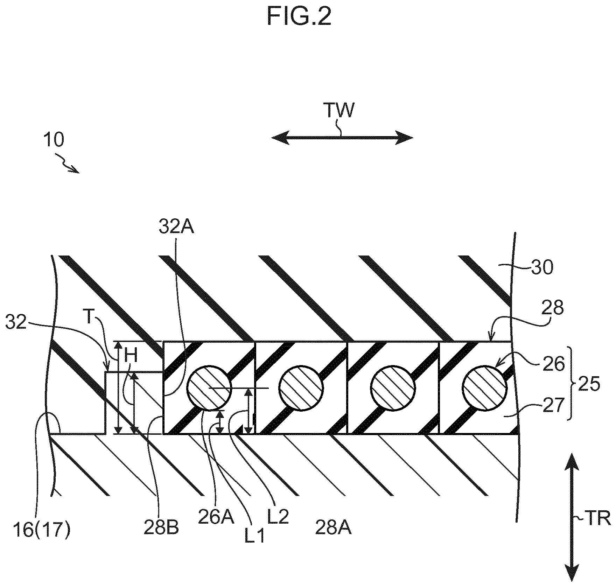

A reinforcing layer 28 is laid at the tire radial direction outer side of the crown portion 16. The reinforcing layer 28 is formed by winding a rubber-covered reinforcing cord 26 (covered by rubber 27) in the tire circumferential direction to form a spiral pattern. In other words, the reinforcing layer 28 is formed by winding a reinforcing cord member 25, formed by covering the reinforcing cord 26 with the rubber 27, in the tire circumferential direction to form a spiral pattern. Note that the rubber covering the reinforcing cord 26 is indicated by the reference number 27 in Fig. 2. Moreover, the rubber 27 covering the reinforcing cord 26 has a substantially rectangular external profile. Note that the reinforcing layer 28 of the present exemplary embodiment is an example of a reinforcing layer of the present invention.

The tread 30 is laid at the tire radial direction outer side of the reinforcing layer 28. The tread 30 covers the reinforcing layer 28. The tread 30 is formed with a tread pattern (not illustrated in the drawings) on a ground contact face that contacts a road surface.

Covering rubber 24 is laid on the tire frame member 17 so as to span from an outer face of each side portion 14 to an inner face of the corresponding bead portion 12. A rubber material having superior weather resistance to the tire frame member 17 and superior sealing properties with respect to a standard rim superior than the tire frame member 17 is employed as the rubber material configuring the covering rubber 24. Note that in the present exemplary embodiment, the outer face of the tire frame member 17 is fully covered by the tread 30 and the covering rubber 24.

Next, detailed explanation follows regarding the projections 32.

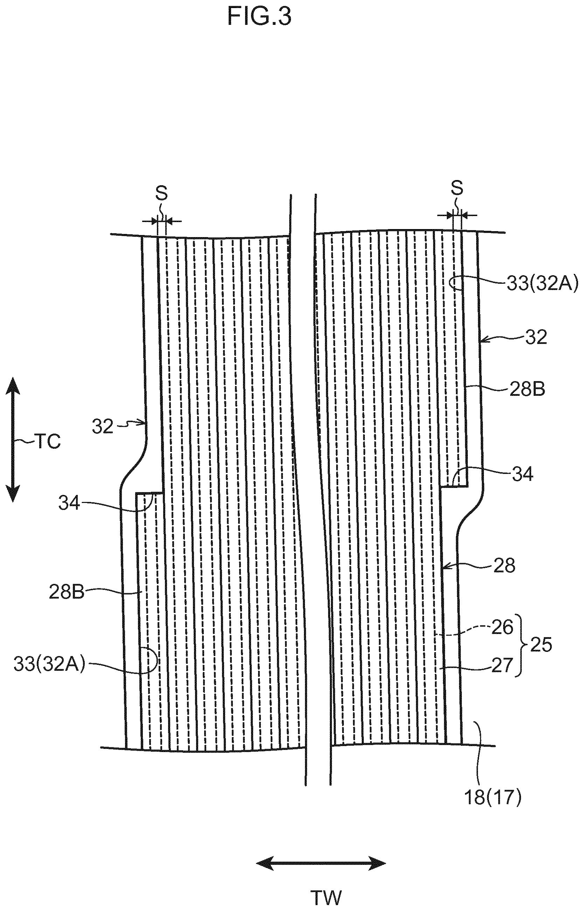

As illustrated in Fig. 1 and Fig. 3, the respective projections 32 are formed on both tire width direction sides, on either side of the reinforcing layer 28 of the crown portion 16. Moreover, the projections 32 are locations that project out from the outer circumferential surface of the crown portion 16 toward the tire radial direction outer side, and are formed continuously along the tire circumferential direction. Moreover, the projections 32 are each formed with a substantially rectangular cross-section profile. At least an inner circumferential portion 28A of the reinforcing layer 28 is disposed between the projections 32, and side faces 28B of the reinforcing layer 28 contact projection wall faces 32A on the tire width direction inner sides of the projections 32. Note that the side faces 28B of the reinforcing layer 28 of the present exemplary embodiment are formed by the rubber 27 covering the reinforcing cord 26.

As illustrated in Fig. 2, a height H of the projections 32 is set so as to be no greater than a thickness T of the reinforcing layer 28, and to be a height greater than a tire radial direction length L1 from an inner circumferential surface of the reinforcing layer 28 to a tire radial direction inner side end portion 26A of the reinforcing cord 26. Note that the height of the projections 32 referred to here indicates the tire radial direction length from the flat outer circumferential surface of the crown portion 16.

Moreover, in the present exemplary embodiment, the height H of the projections 32 is set so as to be a height greater than a tire radial direction length L2 from the inner circumferential surface of the reinforcing layer 28 to the center of the reinforcing cord 26.

As illustrated in Fig. 3, as viewed from the tire radial direction outer side of the crown portion 16, projection wall faces 32A of each projection 32 are inclined in the same direction as the reinforcing cord 26 with respect to the tire circumferential direction. Specifically, the projection wall faces 32A are each configured including an inclined portion 33 that is inclined in the same direction as the reinforcing cord 26 with respect to the tire circumferential direction and that is contacted by the side face 28B of the reinforcing layer 28, and a step portion 34 formed with a stepped profile in the tire width direction with respect to the inclined portion 33. Each step portion 34 is connected to an end portion (a winding-start end or a winding-end end) of the reinforcing cord 26 of the reinforcing layer 28, either directly or through the rubber 27.

Moreover, as illustrated in Fig. 2, the respective projection wall faces 32A of the projections 32 extend in the tire radial direction. In other words, the projection wall faces 32A are substantially perpendicular to the outer circumferential surface of the crown portion 16. Note that the present invention is not limited to such a configuration, and configuration may be made in which the projection wall faces 32A are gradually inclined toward the tire width direction outer sides, or configuration may be made in which the projection wall faces 32A are inclined in steps toward the tire width direction outer side, on progression from the tire radial direction inner side toward the tire radial direction outer side.

Note that in the present exemplary embodiment, the resin material configuring the tire 10 and the rubber are bonded together using an adhesive. Specifically, the tire frame member 17 and the rubber 27 configuring the reinforcing layer 28 are bonded together using an adhesive, and the tire frame member 17 and the tread 30 are adhered together using an adhesive. Moreover, the tire frame member 17 and the covering rubber 24 are similarly adhered together using an adhesive.

Next, explanation follows regarding an example of a manufacturing method of the tire 10 of the present exemplary embodiment.

First, explanation follows regarding a frame forming process.

In the frame forming process, a pair of tire frame half parts (not illustrated in the drawings) corresponding to halves of the tire frame member 17 divided about the crown portion 16 are formed by injection molding a resin material. During injection molding, one projection 32 is formed to the divided crown portion 16 of each tire frame half part. Note that the tire frame half parts are injection molded in a state in which a pre-formed bead core 18 has been disposed at a predetermined position inside the mold. The bead core 18 is thus embedded in the bead portion 12 of the molded tire frame half part.

Next, the pair of tire frame half parts are bonded together by thermal welding so as to form the tire frame member 17.

Then, unvulcanized covering rubber that will become the covering rubber 24 is affixed to the tire frame member 17 from the outer faces of the side portions 14 to the inner faces of the bead portions 12. The tire frame member 17 provided with unvulcanized covering rubber is thus formed.

Note that in the present exemplary embodiment, a pair of the tire frame half parts are formed, and the pair of tire frame half parts are bonded together in order to form the tire frame member 17. However, the present invention is not limited to such a configuration. For example, the tire frame member 17 may be formed from three or more divided parts (such as the bead portions 12, the side portions 14, and the crown portion 16), and the divided parts may be bonded together to form the tire frame member 17. Alternatively, the tire frame member 17 may be formed undivided.

Next, explanation follows regarding a reinforcing layer forming process.

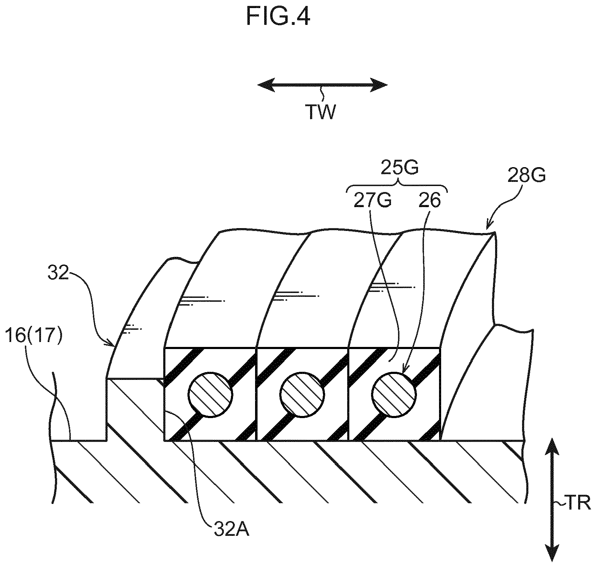

In the reinforcing layer forming process, as illustrated in Fig. 4, the reinforcing cord 26, covered with unvulcanized rubber 27G that will become the rubber 27, is wound to form a spiral pattern between the projections 32 (referred to below as "the two projections 32" as appropriate) on both tire width direction sides of the crown portion 16, thereby forming an unvulcanized reinforcing layer 28G. In other words, the reinforcing layer 28G is formed by winding an unvulcanized reinforcing cord member 25G, formed by covering the reinforcing cord 26 with the rubber 27G, in the tire circumferential direction to form a spiral pattern between the two projections 32 of the crown portion 16. Note that the unvulcanized reinforcing cord member 25G will become the reinforcing cord member 25 after undergoing vulcanization.

Specifically, first, a winding-start end portion at one end portion of the unvulcanized reinforcing cord member 25G is abutted against the step portion 34 (see Fig. 3) of the projection wall face 32A of one of the projections 32, and in this state, the reinforcing cord member 25G is wound around one turn while abutting a side face of the reinforcing cord member 25G against the inclined portion 33. Following this, the reinforcing cord member 25G is wound in a spiral pattern against a bottom face of the projection 32 while abutting the next portion to be wound against a portion wound in the previous turn. Then, a winding-end end portion at the other end portion of the reinforcing cord member 25G is abutted against the step portion 34 after winding the reinforcing cord member 25G around one turn while abutting a side face of the reinforcing cord member 25G against the inclined portion 33 of the projection wall face 32A positioned on a winding-end side of the reinforcing cord member 25G. The unvulcanized reinforcing layer 28G is thus formed in this manner.

In the reinforcing layer forming process described above, configuration is made such that winding is started while abutting the side face of the unvulcanized reinforcing cord member 25G against the projection wall face 32A of one of the projections 32, and winding is ended while abutting the side face of the reinforcing cord member 25G against the other projection wall face 32A. This thereby improves positioning precision of the unvulcanized reinforcing layer 28G after the reinforcing layer forming process.

Moreover, since at least the inner circumferential portion of the reinforcing layer 28G is disposed between the two projections 32, during a vulcanization process, described later, the projection wall faces 32A act as dams, thereby suppressing the unvulcanized rubber 27G from flowing out to the tire width direction outer side of the projection wall faces 32A. In particular, in the present exemplary embodiment, the projection wall faces 32A extend in the tire radial direction, thereby enabling the rubber 27G to be effectively suppressed from flowing out to the tire width direction outer side of the projection wall faces 32A. This thereby enables the reinforcing cord 26 in the reinforcing layer 28 to be disposed at a more uniform spacing after vulcanization.

Next, explanation follows regarding a tread placement process. In the tread placement process, unvulcanized tread rubber (not illustrated in the drawings) that will become the tread 30 is disposed at the tire radial direction outer side of the unvulcanized reinforcing layer 28G. Specifically, unvulcanized tread rubber in a belt shape corresponding to one full turn of the tire is wound onto the outer circumference of the tire frame member 17.

Next, explanation follows regarding the vulcanization process. In the vulcanization process, the unvulcanized rubber 27G adhered to the tire frame member 17, the unvulcanized tread rubber, and the unvulcanized covering rubber are vulcanized. Specifically, the tire frame member 17 is set in a vulcanizer, and the unvulcanized rubber 27, the unvulcanized tread rubber, and the unvulcanized covering rubber are vulcanized by heating to a predetermined temperature for a predetermined length of time. The unvulcanized rubber 27G, the unvulcanized covering rubber, and the unvulcanized tread rubber are thus vulcanized until they reach the level of vulcanization of the final product.

Next, the vulcanized tire 10 is removed from the vulcanizer. The tire 10 is thus completed.

Note that the sequence of the respective processes in the tire manufacturing method of the tire according to the present exemplary embodiment may be modified as appropriate. For example, before affixing the unvulcanized covering rubber to the tire frame member 17, the reinforcing layer 28 may be disposed on the crown portion 16 and the unvulcanized tread rubber may be disposed over the reinforcing layer 28. Moreover, configuration may be made in which unvulcanized covering rubber is affixed to tire half parts before bonding together the pair of tire half parts.

Next, explanation follows regarding operation and advantageous effects of the tire 10 of the present exemplary embodiment.

In the tire 10, the respective projections 32 are formed on both tire width direction sides, and the reinforcing layer 28 of the crown portion 16 is interposed therebetween. The side faces 28B of the reinforcing layer 28 contact the respective projection wall faces 32A of the projections 32. In other words, the reinforcing layer 28 is restrained from both tire width direction sides by the two projection wall faces 32A. Accordingly, in the tire 10, tire width direction movement of the reinforcing layer 28 with respect to the tire frame member 17 as a result of elastic deformation of the rubber 27 configuring the reinforcing layer 28 in response to tire width direction input arising during cornering and the like can be suppressed compared to configurations in which, for example, the reinforcing layer 28 is provided on a flat crown portion 16. The tire 10 is thus capable of suppressing an excessive separation force between the reinforcing layer 28, which includes the rubber 27, and the tire frame member 17 formed from the resin material from arising in response to tire width direction input.

Moreover, in the tire 10, the projections 32 are annular such that they extend along the tire circumferential direction, thereby enabling tire width direction movement of the reinforcing layer 28 to be further suppressed.

Moreover, since the height H of the projections 32 is set to a height no greater than the thickness T of the reinforcing layer 28, the tire 10 is capable of suppressing localized increases in rigidity at locations corresponding to the projections 32 of the crown portion 16 in comparison to configurations in which, for example, the height H of the projections 32 is a greater height than the thickness T of the reinforcing layer 28. On the other hand, setting the height H of the projections 32 to a greater height than the tire radial direction length L1 from the inner circumferential surface of the reinforcing layer 28 to the tire radial direction inner side end portion 26A of the reinforcing cord 26 enables movement of the reinforcing cord 26 due to elastic deformation of the rubber 27 configuring the reinforcing layer 28 in response to tire width direction input to be suppressed. Accordingly, an excessive separation force can be effectively suppressed from arising between the tire frame member 17 and the reinforcing layer 28 in response to tire width direction input. In particular, in the present exemplary embodiment, setting the height H of the projections 32 to a greater height than the tire radial direction length L2 from the inner circumferential surface of the reinforcing layer 28 to the center of the reinforcing cord 26 enables movement of the reinforcing cord 26 in response to tire width direction input to be even more effectively suppressed.

In the tire 10, the reinforcing layer 28 is formed by winding the rubber-covered reinforcing cord 26 (in other words, the reinforcing cord member 25) in the tire circumferential direction to form a spiral pattern between the two projections 32 of the crown portion 16. This improves the tire circumferential direction rigidity of the crown portion 16. Moreover, radial stretch of the crown portion 16 (a phenomenon in which the crown portion 16 bulges out in the tire radial direction) as the tire revolves is suppressed by the hoop effect of the reinforcing layer 28 formed by the rubber-covered reinforcing cord 26.

Moreover, in the tire 10, the inclined portions 33 of the projection wall faces 32A are inclined in the same direction as the reinforcing cord 26 with respect to the tire circumferential direction, such that a spacing (in other words, the thickness of the rubber 27) S between the inclined portions 33 and the reinforcing cord 26 is substantially uniform. Accordingly, in the tire 10, the advantageous effect of suppressing movement of the reinforcing cord 26 in response to tire width direction input is greater than in a configuration in which, for example, the projection wall faces 32A are inclined in a different direction than the reinforcing cord 26 with respect to the tire circumferential direction. This thereby enables an excessive separation force to be even more effectively suppressed from arising between the tire frame member 17 and the reinforcing layer 28 in response to tire width direction input.

### Second Exemplary Embodiment

Next, explanation follows regarding a tire according to a second exemplary embodiment. Note that configurations that are the same as those of the first exemplary embodiment are allocated the same reference numerals, and explanation thereof is omitted where appropriate.

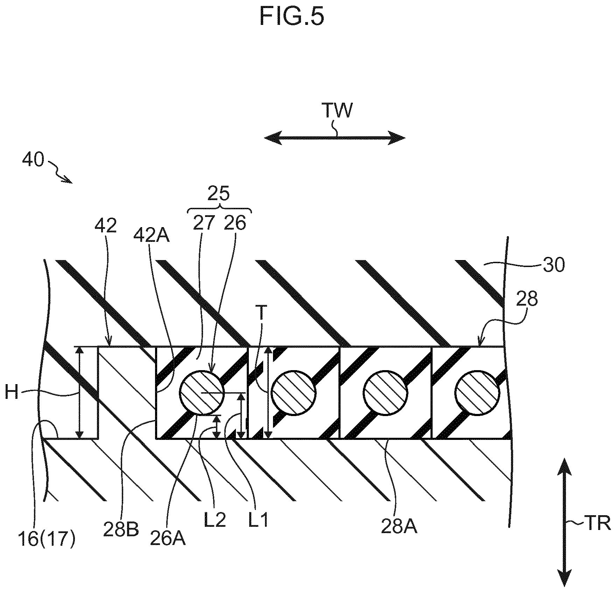

As illustrated in Fig. 5, a tire 40 of the present exemplary embodiment has the same configuration as the tire 10 of the first exemplary embodiment, with the exception of the point that the height H of projections 42 is set to a height having the same value as the thickness T of the reinforcing layer 28.

Explanation follows regarding operation and advantageous effects of the tire 40 of the present exemplary embodiment. Note that explanation regarding operation and advantageous effects obtained by configurations the same as those of the tire 10 of the first exemplary embodiment will be omitted.

In the tire 40, the height H of the projection 42 is set to a height having the same value as the thickness T of the reinforcing layer 28, such that an apex face of the projection 42 is in the same plane as the outer circumferential surface of the reinforcing layer 28. Accordingly, tire width direction movement of the reinforcing layer 28 in response to tire width direction input arising during cornering and the like can be effectively suppressed. Moreover, in the vulcanization process, the unvulcanized rubber 27G can be even better suppressed from flowing out to the tire width direction outer side of projection wall faces 42A.

### Third Exemplary Embodiment

Next, explanation follows regarding a tire according to a third exemplary embodiment. Note that configurations the same as those of the first exemplary embodiment are allocated the same reference numerals, and explanation thereof is omitted where appropriate.

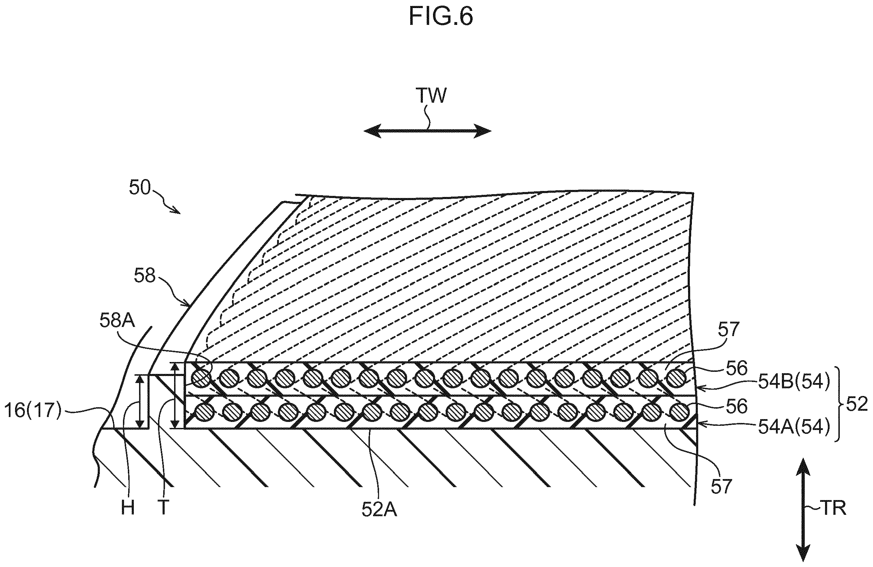

As illustrated in Fig. 6, a tire 50 of the present exemplary embodiment has the same configuration as the tire 10 of the first exemplary embodiment, with the exception of the configurations of a reinforcing layer 52 and projections 58. Note that the reinforcing layer 52 of the present exemplary embodiment is an example of a reinforcing layer of the present invention.

The reinforcing layer 52 is configured by overlaying plural reinforcing plies 54 (two in the present exemplary embodiment). The reinforcing plies 54 are each formed by arranging plural reinforcing cords 56 so as to extend at an angle with respect to the tire width direction, and so as to be spaced apart from each other in the tire circumferential direction, and covering the plural reinforcing cords 56 with rubber. The respective reinforcing cords 56 in each of the mutually overlaid reinforcing plies 54 are inclined in opposite directions to each other with respect to the tire circumferential direction.

Note that in Fig. 6, the rubber that covers the reinforcing cords 56 is indicated by the reference number 57, and the two reinforcing plies 54 are indicated by the reference numerals 54A and 54B in sequence from the tire radial direction inner side. Moreover, the rubber 57 covering the reinforcing cords 56 has a substantially rectangular shaped external profile with its length direction running in the tire width direction.

Moreover, in the present exemplary embodiment, the overlaid reinforcing ply 54A has a substantially uniform width (tire width direction width). Moreover, the reinforcing layer 52 has a substantially uniform width around the tire circumferential direction.

The projections 58 have the same configuration as the projections 32 of the first exemplary embodiment with the exception of the points that projection wall faces 58A extend along the tire circumferential direction and that a spacing (tire width direction length) between the two projection wall faces 58A is substantially uniform. An inner circumferential portion 52A of the reinforcing layer 52 is disposed between the two projections 58. Specifically, at least tire radial direction inner side portions of the reinforcing cords 56 of the reinforcing ply 54B are disposed between the two projections 58.

Next, explanation follows regarding a manufacturing method of the tire 50 of the present exemplary embodiment.

Note that the manufacturing method of the tire 50 of the present exemplary embodiment may employ the processes of the manufacturing method of the tire 10 of the first exemplary embodiment, with the exception of the reinforcing layer forming process, and so the following explanation pertains to a reinforcing layer forming process of the tire 50.

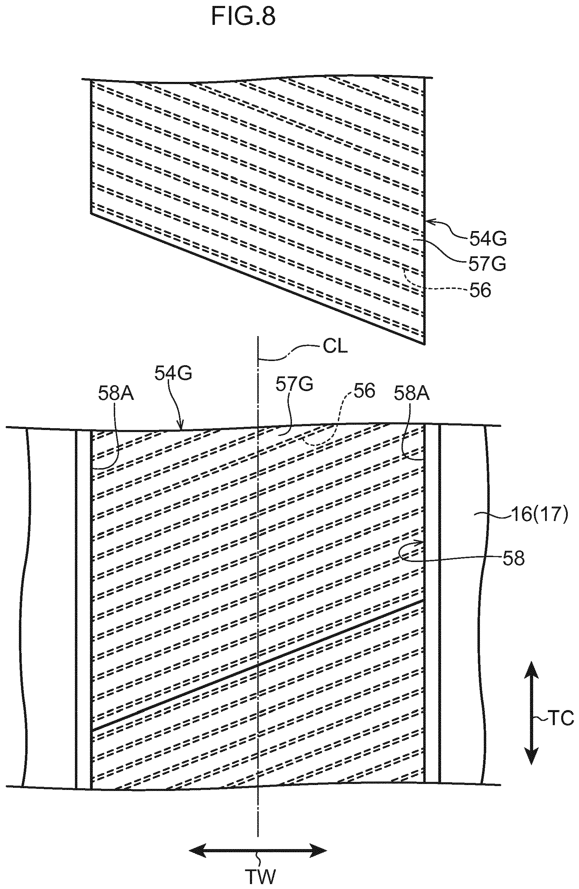

In the reinforcing layer forming process of the present exemplary embodiment, an unvulcanized reinforcing layer 52G that will become the reinforcing layer 52 is formed on the crown portion 16 of the tire frame member 17. First, as illustrated in Fig. 8, plural of the reinforcing cords 56 are arranged spaced apart from each other in one direction, and are covered with rubber 57G in an unvulcanized state so as to form two unvulcanized reinforcing plies 54G in belt shapes with ends. Note that the one direction of the reinforcing ply 54G referred to here is synonymous with the length direction of the reinforcing ply 54G. The reinforcing cords 56 are embedded within the rubber 57G so as to extend at an angle with respect to the width direction of the reinforcing ply 54G. Moreover, the width of the reinforcing ply 54G is formed to a width corresponding to the spacing between the two projections 58.

Next, the first reinforcing ply 54G is wound between the two projections 58 of the crown portion 16, and the two length direction end portions of the first reinforcing ply 54G are abutted against each other. Next, the second reinforcing ply 54G is wound onto the outer circumference of the first reinforcing ply 54G, and the two length direction end portions of the second reinforcing ply 54G are abutted against each other, thereby overlaying the first reinforcing ply 54G with the second reinforcing ply 54G. When this is performed, the second reinforcing ply 54G is overlaid such that the reinforcing cords 56 of the first reinforcing ply 54G and the reinforcing cords 56 of the second reinforcing ply 54G are inclined in opposite directions to each other with respect to the one direction described above. In this manner, the unvulcanized reinforcing layer 52G is formed on the crown portion 16.

Next, explanation follows regarding operation and advantageous effects of the tire 50 of the present exemplary embodiment. Note that explanation regarding operation and advantageous effects obtained by configurations the same as those of the tire 10 of the first exemplary embodiment will be omitted.

In the tire 50, the reinforcing layer 52 is formed by the plural reinforcing plies 54 (two in the present exemplary embodiment), and the respective reinforcing cords 56 in each of the mutually overlaid reinforcing plies 54 are inclined in opposite directions to each other with respect to the tire circumferential direction, thereby obtaining a pantograph effect. Accordingly, in the tire 50, during travel, tire circumferential direction shear force arising between the tread 30 and the crown portion 16 due to a difference between the diameters of the tread 30 and the crown portion 16 is absorbed by the reinforcing layer 52. This thereby enables tire circumferential direction separation force arising between the crown portion 16 and the reinforcing layer 52 and between the reinforcing layer 52 and the tread 30 to be reduced.

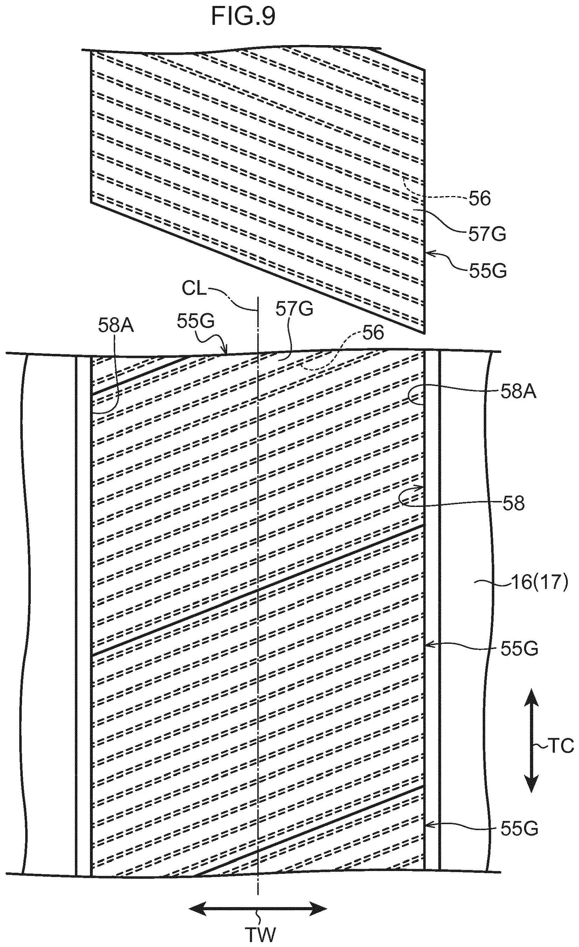

In the manufacturing method of the tire 50 of the third exemplary embodiment, as illustrated in Fig. 8, configuration is made in which the two reinforcing plies 54G are wound onto the crown portion 16. However, the present invention is not limited to such a configuration. For example, as illustrated in Fig. 9, configuration may be made in which the unvulcanized reinforcing ply 54G that has a belt shape with ends is divided into plural pieces in the tire circumferential direction to configure unvulcanized ply pieces 55G. The ply pieces 55G may then be affixed between the two projections 58 of the crown portion 16 to form the unvulcanized reinforcing layer 52G. Specifically, the ply pieces 55G are affixed between the two projections 58 of the crown portion 16 around one full turn to form the first reinforcing ply 54G, and then ply pieces 55G are affixed to the outer circumference of the first reinforcing ply 54G to form the second reinforcing ply 54G. When this is performed, the ply pieces 55G are affixed such that joints between the ply pieces 55G forming the second reinforcing ply 54G do not align with joints between the ply pieces 55G forming the first reinforcing ply 54G (so as to be offset). The unvulcanized reinforcing layer 52G may be formed in this manner.

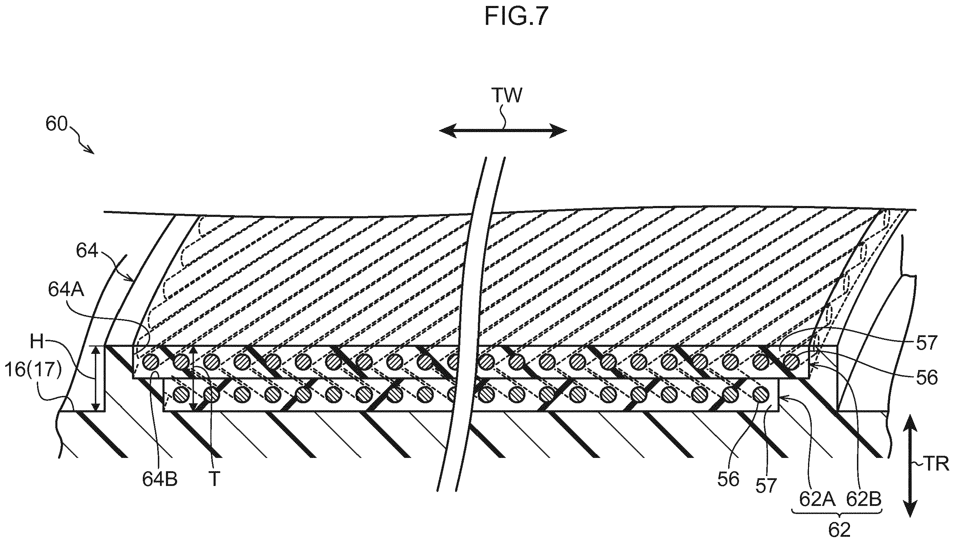

In the tire 50 of the third exemplary embodiment, the mutually overlaid reinforcing plies 54 have substantially the same width as each other. However, the present invention is not limited to such a configuration. For example, as in a reinforcing layer 62 of a tire 60 of a modified example illustrated in Fig. 7, configuration may be made in which a tire radial direction outer side reinforcing ply 62B has a wider width than a tire radial direction inner side reinforcing ply 62A, and projection wall faces 64A of projections 64 are formed with steps 64B to accommodate the different widths of the reinforcing ply 62A and the reinforcing ply 62B.

### Embodiment of the invention

Next, explanation follows regarding a tire according to an embodiment of the present invention. Note that configurations the same as those of the first exemplary embodiment are allocated the same reference numerals, and explanation thereof is omitted where appropriate.

As illustrated in Fig. 11, a tire 70 of the present embodiment has the same configuration as the tire 10 of the first exemplary embodiment, with the exception of the provision of a cover layer 72. Note that the cover layer 72 of the present embodiment is an example of a cover layer of the present invention.

The cover layer 72 extends from the bead portion 12 to the side portion 14 and covers an outer face of the side portion 14. Specifically, the cover layer 72 extends from an outer face of one of the bead portions 12 of the tire frame member 17 to the outer face of one of the side portions 14, passes outer circumferential surfaces of the crown portion 16 and the reinforcing layer 28, and extends over the outer face of the other of the side portions 14 and the outer face of the other of the bead portions 12, thereby fully covering the outer circumference of the tire frame member 17. Note that in the present embodiment, the two ends of the cover layer 72 extend as far as tire radial direction inner side ends of the tire frame member 17; however, it is sufficient that the two ends of the cover layer 72 extend at least as far as a position overlapping with a fitted rim, not illustrated in the drawings, in the tire width direction.

Moreover, the cover layer 72 is disposed further inside the tire than the covering rubber 24 and the tread 30.

The cover layer 72 is formed by covering plural cover cords (not illustrated in the drawings) in rubber. The cover cords extend in a radial direction and are laid spaced apart from each other in the tire circumferential direction. Note that examples of the cover cords include monofilaments (single strands) of metal fibers or organic fibers, as well as multifilaments (twisted strands) of twisted together metal fibers or organic fibers. Materials such as steel may be employed as metal fibers, and materials such as nylon, PET, glass, or aramids may be employed as organic fibers.

Next, explanation follows regarding operation and advantageous effects of the tire 70 of the present embodiment. Note that explanation regarding operation and advantageous effects obtained by configurations the same as those of the tire 10 of the first exemplary embodiment will be omitted.

In the tire 70, the outer faces of the side portions 14 are covered by the cover layer 72 formed by plural cover cords covered in rubber. Accordingly, for example, the cut resistance performance of at least the side portions 14 is improved in comparison to configurations in which the outer faces of the side portions 14 are not covered by the cover layer 72.

In the present embodiment, the cover layer 72 is provided to the tire 70. This configuration in which the cover layer 72 is provided may also be applied to the second exemplary embodiment, the third exemplary embodiment, and the modified examples corresponding to these exemplary embodiments.

In the tire 10 of the first exemplary embodiment, the reinforcing layer 28 and the tread 30 are adhered together using an adhesive. However, the present invention is not limited to such a configuration. Cushioning rubber may be affixed to an inner circumferential surface of the tread 30, and the tread 30 may be adhered to the outer circumferential surfaces of the reinforcing layer 28 and the tire frame member 17 through the cushioning rubber. Note that a configuration including the cushioning rubber may also be applied to the second to the third exemplary embodiments, to the embodiment of the invention and to the modified examples of these exemplary embodiments.

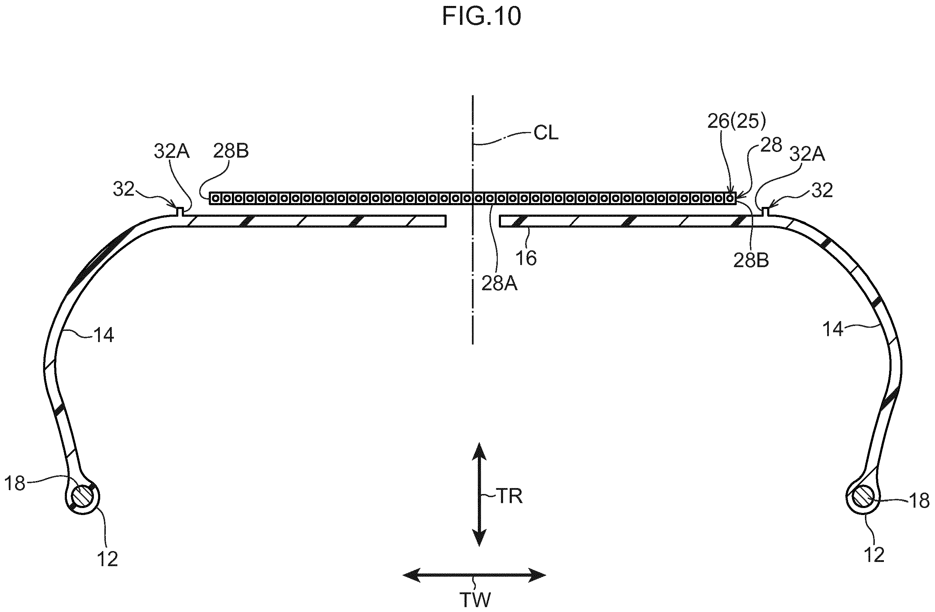

In the first exemplary embodiment, the reinforcing cord 26 covered by the unvulcanized rubber 27G is formed by winding the reinforcing layer 28 between the two projections 32 of the crown portion 16, and then performing vulcanization to manufacture the tire 10. However, the present invention is not limited to such a configuration. For example, the tire 10 may be manufactured by an alternative manufacturing method for the tire 10, illustrated in Fig. 10. In this alternative manufacturing method for the tire 10, a reinforcing cord 26 covered by unvulcanized rubber 27G (an unvulcanized reinforcing cord member 25G) is pre-coiled to form an annular reinforcing layer 28 which is then vulcanized to manufacture a vulcanized reinforcing layer 28. The crown portion 16, divided into tire frame half parts, is then inserted at the circumferential inner side of the reinforcing layer 28 so as to approach the reinforcing layer 28 from both sides. This insertion is performed until the side faces 28B of the reinforcing layer 28 abut the projection wall faces 32A of the projections 32, after which the end portions of the divided crown portion 16 are bonded together using a thermoplastic resin, for example. Note that the reinforcing layer 28 and the crown portion 16 are bonded together by a pre-coated adhesive. An adhesive is then coated onto the outer circumferences of the tire frame member 17 and the reinforcing layer 28 and the covering rubber 24 and the tread 30 are laid, thus manufacturing the tire 10.

In the second exemplary embodiment, the reinforcing layer 28 is disposed between the two projections 32, and the tread 30 is adhered to the reinforcing layer 28 and the surrounding crown portion 16 using an adhesive. However, the present invention is not limited to such a configuration. For example, configuration may be made in which an intersecting belt layer having the same configuration as the reinforcing layer 52 of the third exemplary embodiment is disposed on the outer circumferential surface of the reinforcing layer 28.

In the third exemplary embodiment, the reinforcing layer 62 of a modified example is disposed between the two projections 64, and the tread 30 is adhered to the reinforcing layer 28 and the surrounding crown portion 16 using an adhesive. However, the present invention is not limited to such a configuration. For example, configuration may be made in which a spiral belt layer having the same configuration as the reinforcing layer 28 of the first exemplary embodiment is disposed on an outer circumferential surface of the reinforcing layer 62.

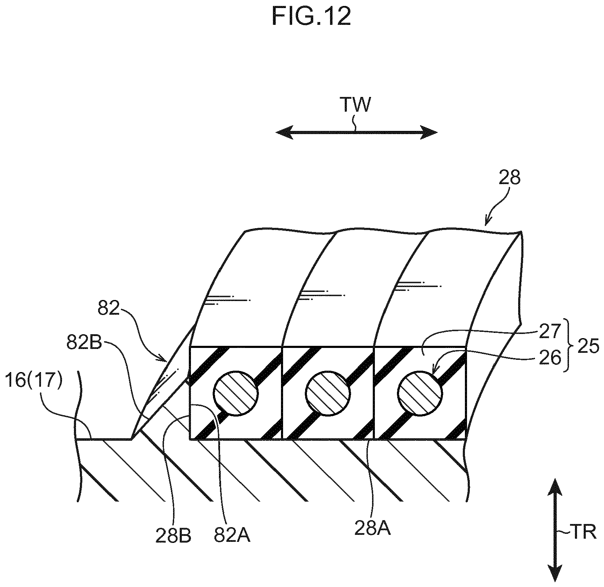

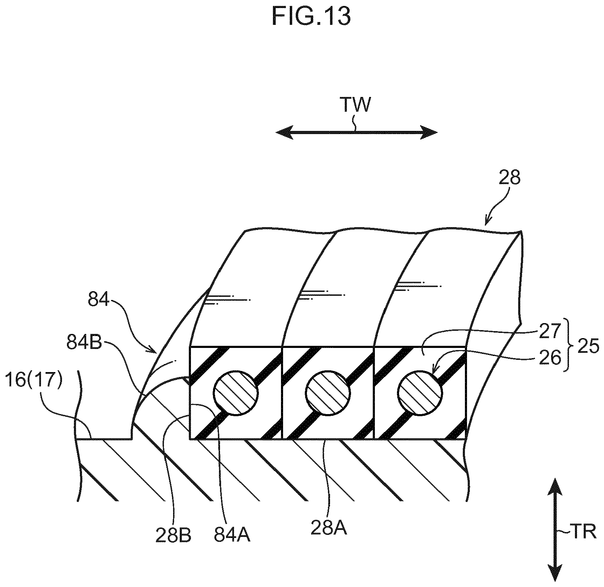

In the tire 10 of the first exemplary embodiment, the projections 32 are configured with a substantially rectangular cross-section profile. However, the present invention is not limited to such a configuration. For example, as in a projection 82 of a first modified example illustrated in Fig. 12, the cross-section profile may be configured with a substantially right-angled triangular shape. Specifically, a face on the opposite side to a tire width direction inner side projection wall face 82A (a tire width direction outer side face) may be configured as an inclined wall face 82B that is inclined such that the width of the projection 82 becomes wider on progression from an apex portion to a base portion of the projection 82. Employing such a configuration enables stress to be suppressed from concentrating on the base portion of the projection 82. Moreover, in a projection 84 of a second modified example illustrated in Fig. 13, a face on the opposite side of a tire width direction inner side projection wall face 84A (a tire width direction outer side face) may be configured as a curved wall face 84B that inclines at a curve such that the width of the projection 82 becomes wider on progression from an apex portion to a base portion of the projection 82. Similarly to the projection 82 of the first modified example, the projection 84 of the second modified example enables stress to be suppressed from concentrating on the base portion of the projection 84.

Note that the configurations of the projection 82 of the first modified example and the projection 84 of the second modified example may also be applied to the second to the third exemplary embodiments, to the embodiment of the invention and to the modified examples of these exemplary embodiments.

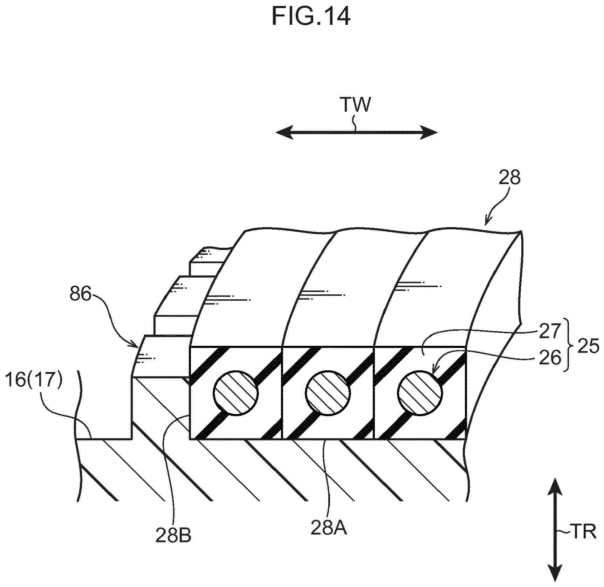

In the tire 10 of the first exemplary embodiment, the projections 32 are formed continuously along the tire circumferential direction. However, the present invention is not limited to such a configuration. For example, as in a projection 86 of a third modified example illustrated in Fig. 14, the projections may be formed intermittently along the tire circumferential direction. Note that the configuration of the projection 86 of the third modified example may also be applied to the second to the third exemplary embodiments, the embodiment of the invention and to the modified examples of these exemplary embodiments.

## Claims

1. A tire (70), comprising:
a circular tire frame member (17) that is formed from a resin material and that includes a bead portion (12), a side portion (14) continuous with a tire radial direction outer side of the bead portion (12), and a crown portion (16) continuous with a tire width direction inner side of the side portion (14);
a reinforcing layer (28) that is provided at a tire radial direction outer side of the crown portion (16), and that is formed by covering, with rubber, a reinforcing cord (26) extending in a direction intersecting the tire width direction;
a tread (30) that is laid at the tire radial direction outer side of the reinforcing layer (28);
a cover layer (72) that extends from the bead portion (12) to the side portion (14), and that covers an outer face of the side portion (14);
covering rubber (24) which is laid on the tire frame member (17) so as to span from the outer face of each side portion (14) to an inner face of the corresponding bead portion (12);
and
projections (32) that are respectively formed at both tire width direction sides of the crown portion (16) such that the reinforcing layer (28) is interposed between the projections (32);
**characterised in that**:
the projections (32) each project out from the outer circumferential surface of the crown portion (16) toward the tire radial direction outer side, and that each include a projection wall face (32A) at a tire width direction inner side that is contacted by a side face (28B) of the reinforcing layer (28); wherein
the cover layer (72) is formed by covering a plurality of cover cords with rubber.

2. The tire (70) of claim 1, wherein each projection (32) is annular and extends along a tire circumferential direction.

3. The tire (70) of either claim 1 or claim 2, wherein a height (H) of each projection (32) is no greater than a thickness (T) of the reinforcing layer (28).

4. The tire (70) of claim 3, wherein the height (H) of each projection (32) is greater than a length (LI) along the tire radial direction from an inner circumferential surface of the reinforcing layer (28) to a tire radial direction inner side end portion (26A) of the reinforcing cord (26).

5. The tire (70) of any one of claim 1 to claim 4, wherein the reinforcing layer (28) is formed by winding the rubber-covered reinforcing cord (26) in a tire circumferential direction to form a spiral pattern.

6. The tire (70) of claim 5, wherein, as viewed from the tire radial direction outer side of the crown portion (16), each projection wall face (32A) is inclined in the same direction as the reinforcing cord (26) with respect to the tire circumferential direction, and a spacing (S) between the projection wall faces (32A) and the reinforcing cord (26) is substantially uniform.

## Patentansprüche

1. Reifen (70), der Folgendes umfasst:
ein kreisförmiges Reifenrahmenelement (17), das aus einem Harzmaterial geformt ist und das einen Wulstabschnitt (12), einen Seitenabschnitt (14), durchgehend mit einer in Reifenradialrichtung äußeren Seite des Wulstabschnitts (12), und einen Scheitelabschnitt (16), durchgehend mit einer in Reifenradialrichtung inneren Seite des Seitenabschnitts (14), einschließt,
eine Verstärkungslage (28), die an einer in Reifenradialrichtung äußeren Seite des Scheitelabschnitts (16) bereitgestellt wird und die durch Überziehen eines Verstärkungskords (26), der sich in einer Richtung erstreckt, welche die Reifenbreitenrichtung schneidet, mit Gummi geformt ist,
eine Lauffläche (30), die an der in Reifenradialrichtung äußeren Seite der Verstärkungslage (28) gelegt ist,
eine Überzugslage (72), die sich von dem Wulstabschnitt (12) bis zu dem Seitenabschnitt (14) erstreckt und die eine äußere Fläche des Seitenabschnitts (14) bedeckt,
Überzugsgummi (24), der so auf das Reifenrahmenelement (17) gelegt ist, dass er sich von der äußeren Fläche jedes Seitenabschnitts (14) bis zu einer inneren Fläche des entsprechenden Wulstabschnitts (12) spannt, und
Vorsprünge (32), die jeweils an beiden Reifenbreitenrichtungsseiten des Scheitelabschnitts (16) derart geformt sind, dass die Verstärkungslage (28) zwischen den Vorsprüngen (32) eingeschoben ist,
**dadurch gekennzeichnet, dass**:
die Vorsprünge (32) jeweils von der äußeren Umfangsfläche des Scheitelabschnitts (16) hin zu der in Reifenradialrichtung äußeren Seite vorspringen und dass jeder eine Vorsprungswandfläche (32A) an einer in Reifenbreitenrichtung inneren Seite einschließt, die durch eine Seitenfläche (28B) der Verstärkungslage (28) berührt wird, wobei
die Überzugslage (72) durch Überziehen von mehreren Überzugskords mit Gummi geformt ist.

2. Reifen (70) nach Anspruch 1, wobei jeder Vorsprung (32) ringförmig ist und sich entlang einer Reifenumfangsrichtung erstreckt.

3. Reifen (70) nach Anspruch 1 oder Anspruch 2, wobei eine Höhe (H) jedes Vorsprungs (32) nicht größer ist als eine Dicke (T) der Verstärkungslage (28).

4. Reifen (70) nach Anspruch 3, wobei die Höhe (H) jedes Vorsprungs (32) größer ist als eine Länge (L1) entlang der Reifenradialrichtung von einer inneren Umfangsfläche der Verstärkungslage (28) bis zu einem in Reifenradialrichtung inneren Seitenendabschnitt (26A) des Verstärkungskords (26).

5. Reifen (70) nach einem der Ansprüche 1 bis 4, wobei die Verstärkungslage (28) durch Wickeln des gummiüberzogenen Verstärkungskords (26) in einer Reifenumfangsrichtung, um ein Spiralmuster zu bilden, geformt ist.

6. Reifen (70) nach Anspruch 5, wobei, wenn betrachtet von der in Reifenradialrichtung äußeren Seite des Scheitelabschnitts (16), jede Vorsprungswandfläche (32A) in Bezug auf die Reifenumfangsrichtung in der gleichen Richtung geneigt ist wie der Verstärkungskord (26) und ein Abstand (S) zwischen den Vorsprungswandflächen (32A) und dem Verstärkungskord (26) im Wesentlichen gleichmäßig ist.

## Revendications

1. Bandage pneumatique (70), comprenant :
un élément de cadre circulaire du bandage pneumatique (17) formé à partir d'un matériau de résine et incluant une partie de talon (12) une partie de flanc (14) continue par rapport à un côté externe, dans la direction radiale du bandage pneumatique, de la partie de talon (12), et une partie de sommet (16) continue par rapport à un côté interne, dans la direction de la largeur du bandage pneumatique, de la partie de flanc (14) ;
une couche de renforcement (28) agencée au niveau d'un côté externe, dans la direction radiale du bandage pneumatique, de la partie de sommet (16), formée en recouvrant de caoutchouc un câblé de renforcement (26) s'étendant dans une direction coupant la direction de la largeur du bandage pneumatique ;
une bande de roulement (30) disposée au niveau du côté externe, dans la direction radiale du bandage pneumatique, de la couche de renforcement (28) ;
une couche de couverture (72) s'étendant de la partie de talon (12) vers la partie de flanc (14) et recouvrant une face externe de la partie de flanc (14) ;
un caoutchouc de recouvrement (24) disposé sur l'élément de cadre du bandage pneumatique (17), de sorte à s'étendre de la face externe de chaque partie de flanc (14) vers une face interne de la partie de talon (12) correspondante; et
des saillies (32) formées respectivement au niveau des deux côtés, dans la direction de la largeur du bandage pneumatique, de la partie de sommet (16), de sorte que la couche de renforcement (28) est agencée entre les saillies (32) ;
**caractérisé en ce que** :
les saillies (32) débordent chacune hors de la surface circonférentielle externe de la partie de sommet (16) vers le côté externe, dans la direction radiale du bandage pneumatique, et incluent chacune une face de paroi de saillie (32A) au niveau d'un côté interne, dans la direction de la largeur du bandage pneumatique, contactée par une face latérale (28B) de la couche de renforcement (28) ; dans lequel :
la couche de couverture (72) est formée en recouvrant de caoutchouc plusieurs câblés de recouvrement.

2. Bandage pneumatique (70) selon la revendication 1, dans lequel chaque saillie (32) est annulaire et s'étend le long de la direction circonférentielle du bandage pneumatique.

3. Bandage pneumatique (70) selon les revendications 1 ou 2, dans lequel une hauteur (H) de chaque saillie (32) n'est pas supérieure à une épaisseur (T) de la couche de renforcement (28).

4. Bandage pneumatique (70) selon la revendication 3, dans lequel la hauteur (H) de chaque saillie (32) est supérieure à une longueur (L), le long de la direction radiale du bandage pneumatique, d'une surface circonférentielle interne de la couche de renforcement (28) vers une partie d'extrémité du côté interne, dans la direction radiale du bandage pneumatique (26A) du câblé de renforcement (26).

5. Bandage pneumatique (70) selon l'une quelconque des revendications 1 à 4, dans lequel la couche de renforcement (28) est formée en enroulant un câblé de renforcement recouvert de caoutchouc (26) dans une direction circonférentielle du bandage pneumatique, pour former un motif en spirale.

6. Bandage pneumatique (70) selon la revendication 5, dans lequel, vu à partir du côté externe, dans la direction radiale du bandage pneumatique, de la partie de sommet (16), chaque face de paroi de saillie (32A) est inclinée dans la même direction que le câblé de renforcement (26) par rapport à la direction circonférentielle du bandage pneumatique et un espacement (S) entre les faces de paroi des saillies (32A) et le câblé de renforcement (26) est sensiblement uniforme.
